# FASCICULE DE BREVET EUROPEEN

(11) **EP 1 817 870 B1**
(45) Date de publication et mention de la délivrance du brevet: **03.01.2018**
(21) Numéro de dépôt: 05817159.6
(22) Date de dépôt: 16.11.2005
(51) Int. Cl.: H04L 12/24

(54) **PROCEDE DE SURVEILLANCE DU FONCTIONNEMENT D'UN TERMINAL DE TELECOMMUNICATION DANS UN RESEAU DE TELECOMMUNICATION PAR FIBRE OPTIQUE**
VERFAHREN ZUR ÜBERWACHUNG DES BETRIEBS EINES TELEKOMMUNIKATIONSENDGERÄTES IN EINEM FASEROPTISCHEN TELEKOMMUNIKATIONSNETZWERK
METHOD FOR MONITORING OPERATION OF A TELECOMMUNICATION TERMINAL IN A FIBER-OPTIC TELECOMMUNICATION NETWORK

(30) Priorité: 03.12.2004 FR 0412905
(43) Date de publication de la demande: 15.08.2007
(73) Titulaire: Orange, 75015 Paris (FR)
(72) Inventeur: ETRILLARD, Jackie, F-22300 Lannion (FR)
(74) Mandataire: Vidon Brevets & Stratégie
(86) Numéro de dépôt international: PCT/FR2005/002847
(87) Numéro de publication internationale: WO 2006/061470

(56) Documents cités:
- US-A- 6 023 467
- US-A- 6 144 665
- US-A1- 2002 003 778
- US-A1- 2003 081 556
- US-A1- 2003 215 236

## Description

La présente invention concerne un procédé de surveillance du fonctionnement d'un terminal de télécommunication dans un réseau de télécommunication par fibre optique.

Un terminal de télécommunication tel que celui utilisé par l'invention est relié à un réseau d'un opérateur de télécommunication par une fibre optique. Cette fibre optique permet au terminal d'émettre et/ou de recevoir des signaux de télécommunication vers ou depuis l'opérateur de télécommunication. L'alimentation électrique principale des terminaux du réseau est assurée séparément par les voies conventionnelles connues c'est-à-dire par le réseau de puissance local.

Cependant, des problèmes d'alimentation électrique peuvent survenir dans le réseau lors d'intempéries ou de panne sectorielle par exemple. Dans ce cas, au moins une batterie de secours est prévue dans le terminal pour assurer l'alimentation du terminal pendant une durée limitée. Or, cette batterie n'est qu'une solution temporaire et de secours. En effet, rien n'empêche l'utilisateur s'il le souhaite d'utiliser la batterie jusqu'à épuisement, malgré des avertissements éventuels suggérés par le terminal de télécommunication disposant de systèmes de contrôle d'alimentation l'informant de ce risque. Par ailleurs, cette batterie peut se décharger d'elle-même au bout d'une durée prédéterminée d'inutilisation en l'absence d'étape de charge ou suite à une altération. Ainsi, la gestion de l'énergie utilisée par le terminal de télécommunication est aléatoire.

Lorsque l'énergie stockée dans la batterie de secours est épuisée, l'utilisateur ne peut plus alors réaliser aucune communication, même urgente. L'obligation légale de garantir l'accessibilité aux numéros d'urgence ne peut donc être véritablement réalisée.

La discontinuité électrique due à l'utilisation de fibres optiques ne permet pas l'envoi de signaux électriques à distance par un opérateur. Dans ce contexte, la surveillance des voies de télécommunication n'est pas possible. Or, cette surveillance permet d'une part, une maîtrise des coûts en évitant des mesures annexes onéreuses et, d'autre part, une maîtrise du réseau en temps réel qui peut être intéressante en cas de litige sur la cause d'un disfonctionnement.

Le document de brevet US 2002/003778 propose un procédé d'identification et d'alerte d'une anomalie d'un dispositif de communication placé dans un réseau de communication optique, géré par un réseau OAM d'un opérateur, et d'un lien optique associé. Toutefois, ce procédé permet de détecter une erreur mais seulement après qu'elle ne se produise.

Le but de l'invention est donc d'assurer d'une part, un moyen de communication permanent entre l'utilisateur et des services d'urgences et d'autre part, un contrôle du fonctionnement de terminaux de télécommunication et du réseau de fibres optiques associé.

A cet effet, la présente invention concerne un procédé de surveillance du fonctionnement d'un terminal de télécommunication placé dans un réseau de télécommunication à accès optique ainsi que d'un lien optique de télécommunication associé, ledit réseau de télécommunication à accès optique étant géré par un réseau OAM d'un opérateur, caractérisé en ce qu'il inclut :
- une étape de réception par un dispositif de surveillance de données de surveillance issues de capteurs de mesures et émises par ledit terminal ;
- une étape d'analyse desdites données par ledit dispositif de surveillance, destinée à mettre en évidence une anomalie éventuelle ; et
- une étape d'alerte d'au moins ledit réseau OAM de l'opérateur en cas de mise en évidence d'une anomalie.

La réception de données obtenues directement depuis le terminal, objet de la surveillance, permet une surveillance plus efficace présentant un risque d'erreur réduit.

L'analyse des données transmises par le terminal permet de distinguer des données significatives d'un fonctionnement normal du terminal et de la ligne associée de données significatives d'un fonctionnement anormal de ces éléments.

L'étape d'alerte permet avantageusement d'assurer une alerte de l'opérateur et éventuellement d'interlocuteurs désignés à l'avance ce qui constitue un contrôle des moyens de télécommunications.

Selon une caractéristique avantageuse de l'invention, le procédé inclut une étape de corrélation d'alerte destinée à permettre la détermination de caractéristiques de l'anomalie.

L'étape de corrélation d'alerte permet à l'opérateur de télécommunications d'intervenir de la manière la plus efficace et la plus rapide possible sur l'anomalie.

Selon une caractéristique particulière de l'invention, le procédé inclut une étape de configuration consistant à modifier la périodicité d'émission des données de surveillance par ledit terminal en cas de détection d'une anomalie.

L'étape de configuration permet avantageusement d'adapter le terminal aux besoins liés à la surveillance.

Selon une autre caractéristique particulière de l'invention, le procédé inclut une étape de configuration consistant à transmettre un signal du dispositif de surveillance au terminal permettant de limiter les communications reçues et émises par le terminal de télécommunication à une liste de liaisons de communications prédéterminées.

Cette étape de configuration permet de garantir une autonomie du terminal pour une liste prédéfinie d'interlocuteurs.

L'invention concerne également un module logiciel stocké sur un support de données comportant des instructions logicielles pour faire exécuter le procédé précédemment décrit.

Le module logiciel permet avantageusement de gérer l'ensemble des étapes du procédé selon l'invention.

L'invention concerne également un système de surveillance du fonctionnement d'un terminal de télécommunication placé dans un réseau de télécommunication à accès optique ainsi que d'un lien optique de télécommunication associé, ledit réseau de télécommunication à accès optique étant géré par un réseau OAM d'un opérateur, caractérisé en ce qu'il comporte :
- des moyens de réception par un dispositif de surveillance de données de surveillance issues de capteurs de mesures et émises par ledit terminal ;
- des moyens d'analyse desdites données destinés à mettre en évidence une anomalie éventuelle, et
- des moyens d'alerte d'au moins ledit réseau OEM de l'opérateur en cas de mise en évidence d'une anomalie.

Les moyens de réception permettent avantageusement de recevoir les signaux émis par le terminal.

Les moyens d'analyse permettent avantageusement de définir une hiérarchie d'importance des anomalies permettant d'éviter un déclenchement intempestif des moyens d'alerte.

Les moyens d'alerte permettent avantageusement d'assurer un suivi rapide et efficace en cas d'anomalie.

Selon une caractéristique particulière de l'invention, le système inclut des moyens de corrélation d'alerte destinés à permettre la détermination de caractéristiques de l'anomalie.

Les moyens de corrélation d'alerte permettent d'associer plusieurs alertes par leurs caractéristiques communes. Ils permettent de rapidement distinguer les différents types d'alerte et leurs origines, ainsi que de hiérarchiser ces alertes.

Selon une autre caractéristique particulière de l'invention, le système inclut des moyens de configuration permettant de modifier la périodicité d'émission des données de surveillance par ledit terminal.

Les moyens de configuration permettent d'adapter la périodicité des mesures en cas de détection d'anomalie afin de confirmer la présence effective d'une anomalie.

Selon une autre caractéristique particulière de l'invention, le système inclut des moyens de configuration permettant de transmettre un signal du dispositif de surveillance au terminal afin de limiter les communications reçues et émises par le terminal de télécommunication à une liste de liaisons de communications prédéterminées.

Ces moyens de configuration permettent de bloquer les appels considérés comme non urgents et de préserver une autonomie dédiée aux appels d'urgence.

L'invention concerne également un dispositif de surveillance d'un terminal de télécommunication placé dans un réseau de télécommunication optique et d'un lien optique de télécommunication associé, caractérisé en ce qu'il comprend des moyens pour mettre en oeuvre les étapes du procédé décrit ci-dessus.

Le dispositif de surveillance permet de réaliser la surveillance proprement dite, c'est-à-dire le traitement des données de surveillance et le déclenchement de réactions en conséquence.

L'invention concerne également un terminal de télécommunication placé dans un réseau de télécommunication optique, caractérisé en ce qu'il comprend des capteurs de mesure de données de surveillance et des moyens d'émission de données de surveillance.

Le terminal participe à la surveillance en transmettant les données qui serviront notamment à sa propre surveillance. Ainsi, les données transmises permettent une surveillance à la fois du terminal et du lien optique associé.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints parmi lesquels:
la Fig. 1 est un algorithme représentant les différentes étapes d'un premier mode de mise en oeuvre d'un procédé selon l'invention ;
la Fig. 2 est un algorithme représentant les différentes étapes d'un second mode de mise en oeuvre d'un procédé selon l'invention ;
la Fig. 3 est une représentation schématique d'un système dans lequel le procédé selon l'invention est mis en oeuvre.

Dans le procédé selon l'invention, une surveillance de terminaux de télécommunication prédéterminés et des lignes optiques de télécommunication reliant respectivement ces terminaux à un opérateur de télécommunication est réalisée. Pour cela les terminaux sont de préférence équipés d'une part, de moyens de mesure d'une valeur courante d'un paramètre représentatif du niveau de charge de la batterie du terminal et, d'autre part, de moyens d'émission d'un signal à périodicité modifiable. Un dispositif de surveillance placé en réception comporte des moyens de réception du signal émis par le terminal. La périodicité d'émission d'un signal est choisie préalablement à la mise en oeuvre du procédé. Cette périodicité est de préférence définie de manière à éviter un déclenchement trop rapide d'une alerte, notamment en cas de problème momentané.

Un terminal de télécommunication selon l'invention peut aussi bien être un terminal dont l'unique fonction est de permettre l'émission et la réception de signaux de données telles que des données téléphoniques, qu'un équipement dont une des nombreuses fonctions est de permettre l'émission ou la réception de tels signaux de données.

L'émission et la réception de données sont par exemple effectuées par la technologie ATM (Asynchronous Transfert Mode) ou par la technologie Ethernet. A cet effet, les données issues des moyens de mesure sont converties en données numériques et interfacées de façon à pouvoir être émises par ces protocoles.

On notera que dans la suite de la description, les actions liées à l'opérateur font intervenir le réseau de l'opérateur appelé réseau OAM (Opération, Administration et Maintenance).

Le procédé selon l'invention comporte deux modes de mise en oeuvre comportant chacun cinq étapes principales. Le principe général de ces étapes est décrit brièvement ci-après.

Au cours d'une première étape E1, des données sont reçues d'une source qui est de préférence le terminal de télécommunication. Au cours d'une étape E2, les données précédemment reçues sont analysées afin de déterminer si elles sont conformes à un ensemble de données prédéterminées représentatives de valeurs attendues. Au cours d'une étape E3, si les données récupérées ne sont pas conformes aux données prédéterminées alors ces données récupérées sont vérifiées par au moins une autre analyse. Au cours d'une étape E4, si les données récupérées et vérifiées ne sont effectivement pas conformes alors une alerte est lancée. Au cours d'une étape E5, une corrélation des alertes lancées est effectuée afin de déterminer l'origine de ces alertes.

Les cinq étapes décrites précédemment se déclinent différemment selon le premier ou le second mode de mise en oeuvre de l'invention. On notera cependant que ces modes de mise en oeuvre de l'invention sont de préférence exécutés de manière simultanée.

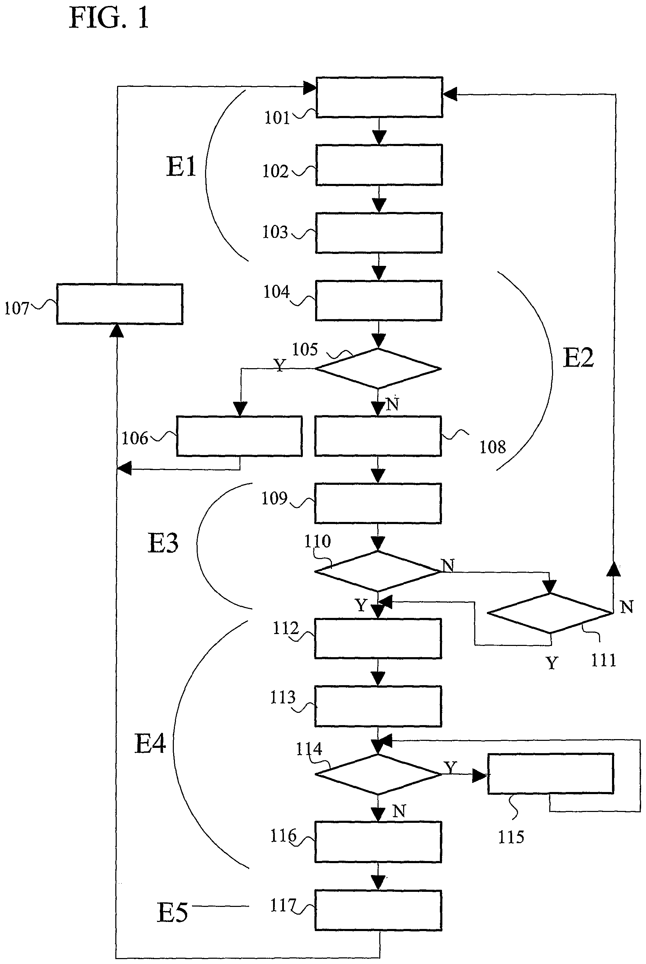

Dans le premier mode de mise en oeuvre du procédé selon l'invention, les cinq étapes précédemment décrites se déclinent de la manière exposée ci-après en relation avec la Fig. 1.

On notera que les étapes 101 à 108 décrites par la suite et notamment l'étape 101 qui est à l'initiative des étapes 102 à 108 suivantes, sont réalisées avec une périodicité prédéterminée.

Selon ce premier mode de mise en oeuvre, au cours d'une étape de mesure 101, une mesure d'une valeur courante d'un paramètre représentatif d'un niveau de charge de la batterie du terminal est réalisée. Ce paramètre représentatif d'un niveau de charge est de préférence la tension aux bornes d'une batterie que comporte le terminal de télécommunication. Cette batterie est de préférence constituée de deux accumulateurs de faible capacité prévus pour être utilisés à tour de rôle, et ainsi pouvoir optimiser les cycles de charge de ces accumulateurs. Cette mesure est de préférence réalisée par des capteurs installés dans le terminal à cet effet. Cette valeur courante d'un paramètre représentatif d'un niveau de charge de la batterie est ensuite transmise, au cours d'une étape de transmission 102, à une base de données du dispositif de surveillance, dans laquelle elle est enregistrée provisoirement au cours d'une étape de pré-enregistrement 103. L'étape de mesure 101, l'étape de transmission 102 et l'étape de pré-enregistrement 103 forment des sous-étapes de l'étape E1 selon ce mode de mise en oeuvre.

Au cours d'une étape d'analyse 104, la valeur courante mesurée est comparée à une valeur théorique prédéterminée en fonction de caractéristiques propres au terminal utilisé et au lien optique utilisé.

Si à l'issue d'une étape de bilan 105, la valeur courante mesurée est jugée conforme à la valeur théorique prédéterminée alors, au cours d'une étape de suppression 106, la valeur courante mesurée est effacée de la base de données du dispositif de surveillance dans laquelle elle avait été enregistrée provisoirement. L'étape consécutive est alors une étape de reconfiguration 107 au cours de laquelle la périodicité courante d'émission d'un signal est redéfinie comme étant la périodicité prédéterminée. A l'issue de cette étape de reconfiguration 107, le procédé redémarre à l'étape de mesure 101.

On notera que la reconfiguration peut être effectuée directement par le terminal ou par la commande à distance de moyens prévus à cet effet dans le terminal.

Si à l'issue d'une étape de bilan 105, la valeur courante mesurée du paramètre représentatif d'un niveau de charge n'est pas jugée conforme à une valeur théorique prédéterminée de ce même paramètre alors, au cours d'une étape d'enregistrement 108, cette valeur courante mesurée est enregistrée pour une durée nécessaire au retour à un fonctionnement normal du système sous gestion du réseau OAM de l'opérateur dans la base de données du dispositif de surveillance choisie à cet effet.

L'étape d'analyse 104, l'étape de bilan 105, l'étape de suppression 106, l'étape de reconfiguration 107 et l'étape d'enregistrement 108 forment des sous-étapes de l'étape E2 selon ce mode de mise en oeuvre.

Au cours d'une étape de configuration 109, la périodicité courante d'émission d'un signal est augmentée et un compteur faisant varier la valeur d'un nombre n est incrémenté d'une unité. Au cours d'une étape de comparaison 110, la valeur courante mesurée du paramètre représentatif d'un niveau de charge est comparée à une valeur prédéfinie de ce même paramètre appelée valeur seuil.

Dans une variante de réalisation préférée, une courbe représentative du niveau de charge de la batterie du terminal en fonction du temps est tracée. La valeur courante mesurée est utilisée pour tracer cette courbe de charge avant d'être supprimée au cours de l'étape de suppression 106 de la base de donnée du dispositif de surveillance où elle avait été pré-enregistrée. Au cours de l'étape de comparaison 110, cette courbe est comparée à une courbe étalon. Cette courbe étalon est la référence qui détermine le déclenchement d'une alerte.

A l'issue de cette comparaison, si la valeur courante est supérieure à la valeur seuil, alors l'étape suivante est une étape de vérification 111. Au cours de cette étape de vérification 111, si le nombre n est inférieur à un nombre N prédéfini représentant le nombre maximal de configuration autorisé, alors le procédé recommence à l'étape 101. Ce retour à la première des étapes du procédé permet notamment de ne pas tenir compte d'anomalies par exemple dues à des perturbations momentanées du réseau de télécommunication telles que des microcoupures électriques ou des parasites électriques.

En revanche, si le nombre n est supérieur ou égal au nombre N, alors l'étape suivante est une étape d'avertissement 112. De même, si à l'issue de l'étape de comparaison 110, la valeur courante est inférieure ou égale à la valeur seuil, alors l'étape suivante est l'étape d'avertissement 112. Dans ces deux cas, le fonctionnement anormal du terminal est mis en évidence et des mesures d'alerte doivent être prises pour y remédier.

On notera que l'étape de configuration 109, l'étape de comparaison 110 et l'étape de vérification 111 forment des sous-étapes de l'étape E3 selon ce mode de mise en oeuvre.

Cette étape d'avertissement 112 consiste à transmettre à l'utilisateur du terminal dont le niveau de charge est réduit, un message l'avertissant de cet état de fait. Ce message est, par exemple, un message oral préenregistré ou un message écrit. Consécutivement, au cours d'une étape de limitation 113, les moyens d'émission et de réception de communications du terminal de télécommunication sont configurés de manière à ne pouvoir respectivement émettre que vers une liste de liaisons de communications prédéterminées ou recevoir depuis cette même liste de liaisons de communications prédéterminées. De manière avantageuse, la liste contient les numéros de téléphone de la police, des services de secours, des services d'urgences médicales, des parents proches de l'utilisateur, etc. Cette configuration est de préférence organisée à distance par un logiciel de priorisation des appels connu de l'état de la technique. On notera que des adresses électroniques d'interlocuteurs à contacter pourraient également être prévues dans cette liste.

Au cours d'une étape de vérification 114 la valeur courante mesurée d'un paramètre représentatif du niveau de charge est comparée à une valeur en dessous de laquelle le terminal ne peut plus fonctionner de manière à déterminer si la valeur courante mesurée permet d'assurer le fonctionnement du terminal. On désignera cette valeur par valeur NF. Si cette valeur courante mesurée est supérieure à la valeur NF alors une nouvelle mesure d'une valeur courante d'un paramètre représentatif du niveau de charge est effectuée au cours d'une étape de mesure 115. A l'issue de cette nouvelle mesure l'étape de vérification 114 est à nouveau exécutée et ainsi de suite tant que la valeur courante du paramètre représentatif d'un niveau de charge est supérieure à la valeur NF.

Lorsque la valeur courante du paramètre représentatif du niveau de charge du terminal est égale ou inférieure à la valeur NF, alors plus aucun appel ne peut être émis ou reçu par le terminal. L'étape suivante est donc une étape de transmission 116 d'un message d'alerte à au moins un interlocuteur prédéterminé. Cet interlocuteur est en priorité l'opérateur. Néanmoins au cours de cette étape 116, d'autres interlocuteurs préalablement désignés peuvent être avertis par l'opérateur de l'impossibilité pour l'utilisateur de pouvoir communiquer au travers de son terminal. En variante, cette étape de transmission 116 peut être engagée de manière automatique à l'issue de l'exécution de l'étape précédente.

L'étape d'avertissement 112, l'étape de limitation 113, l'étape de vérification 114, l'étape de mesure 115 et l'étape de transmission 116 forment des sous-étapes de l'étape E4 selon ce mode de mise en oeuvre.

Au cours d'une étape de corrélation 117 intervenant ultérieurement et de manière indépendante, une corrélation est effectuée entre les différentes alertes émises concernant des terminaux distincts de manière à déterminer d'éventuels points communs entre ces alertes, par exemple une coupure de secteur due à des travaux de génie civil dans une zone géographique définie. L'étape de corrélation 117 est l'équivalent de l'étape E5 selon ce mode de mise en oeuvre.

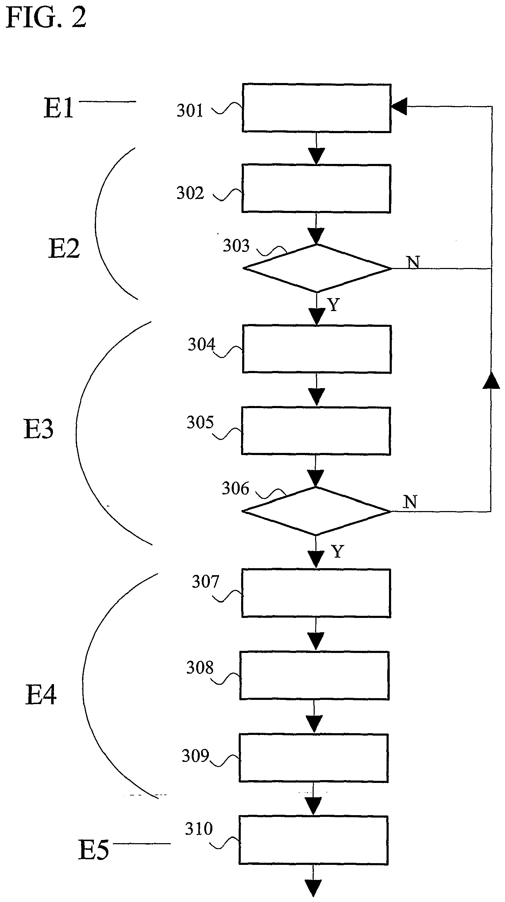

Dans le second mode de mise en oeuvre du procédé selon l'invention, les cinq étapes E1 à E5 précédemment décrites se déclinent de la manière exposée ci-après en relation avec la Fig. 2. Dans ce mode de mise en oeuvre, le procédé permet une surveillance des éléments d'optique présents en émission et du lien optique existant entre le terminal et l'opérateur. Pour cela, des moyens de mesure déterminent des données caractéristiques liées aux éléments d'optique et au lien optique existant entre le terminal et l'opérateur. Ces données caractéristiques sont par exemple la puissance d'émission optique, l'énergie d'émission optique, le spectre d'émission optique. Ces données caractéristiques sont converties en données numériques et sont ensuite transmises par des moyens d'émission d'un signal avec une périodicité prédéterminée au dispositif de surveillance.

Au cours d'une étape de réception 301, les données numériques transmises sont réceptionnées par le dispositif de surveillance. Cette étape 301 est considérée comme équivalente à l'étape E1 précédemment décrite selon ce mode de mise en oeuvre.

Au cours d'une étape d'analyse 302, les caractéristiques présentes dans ces données numériques sont extraites. Au cours de cette étape de bilan 303, les caractéristiques obtenues au cours de l'étape précédente sont comparées à des caractéristiques théoriques prédéterminées pour des éléments d'optique et un lien optique similaire. L'étape d'analyse 302 et l'étape de bilan 303 forment des sous-étapes de l'étape E2 selon ce mode de mise en oeuvre.

Si à l'issue de cette étape de bilan 303, les caractéristiques reçues sont jugées conformes aux caractéristiques théoriques, alors l'étape suivante est l'étape de réception d'impulsion optique 301.

Si à l'issue de cette étape de bilan 303, les caractéristiques reçues ne sont pas jugées conformes aux caractéristiques théoriques, alors l'étape suivante est une étape de transmission 304. L'absence de conformité permet de déduire, par exemple, des problèmes tels qu'une perte en ligne, une dérive de source, etc.

Au cours de cette étape de transmission 304, un message est envoyé à une unité de supervision afin de l'avertir de la non-conformité des caractéristiques analysées par rapport aux caractéristiques théoriques attendues.

Au cours d'une seconde étape d'analyse 305, l'unité de supervision réalise une nouvelle mesure optique plus précise et en déduit des caractéristiques correspondantes. Cette nouvelle mesure peut consister en une mesure utilisant une technologie de réflectométrie optique dans le domaine temporel (OTDR en terminologie anglophone qui signifie Optical Time Domain Reflectometer).

Si à l'issue de la comparaison effectuée au cours d'une étape de bilan définitif 306 entre les caractéristiques précédemment déduites et des caractéristiques théoriques déterminées dans des conditions expérimentales identiques, les caractéristiques déduites sont considérées comme conformes aux caractéristiques théoriques, alors aucune anomalie n'est confirmée et l'étape suivante est à nouveau l'étape de réception 301.

Si en revanche, à l'issue de la comparaison effectuée au cours d'une étape de bilan définitif 306 les caractéristiques déduites sont considérées comme non conformes aux caractéristiques théoriques, alors l'anomalie détectée au cours de l'étape de bilan 303 est confirmée, et l'étape suivante est une étape de transmission 307. L'anomalie confirmée permet de certifier qu'il existe un problème de nature optique et permet de connaître l'origine de ce problème. A l'issue de la présente étape, il est notamment possible de savoir si le problème optique rencontré provient des éléments d'optique tels que la source optique ou du lien optique et sa nature exacte.

L'étape de transmission 304, l'étape d'analyse 305 et l'étape de bilan définitif 306 forment des sous-étapes de l'étape E3 selon ce mode de mise en oeuvre.

Au cours de l'étape de transmission 307, un message d'avertissement est transmis à un opérateur distant de manière à permettre l'enregistrement de l'anomalie rencontrée dans une base de données du dispositif de surveillance au cours d'une étape d'enregistrement 308.

Un message d'alerte est ensuite transmis au cours d'une étape de transmission 309 à une liste prédéfinie d'interlocuteurs si l'utilisateur du terminal en a désigné au préalable. Ces interlocuteurs peuvent notamment être les suivants : l'utilisateur du terminal lui-même, des sociétés de dépannage, etc. Ce message d'alerte peut prendre par exemple la forme d'un message préenregistré dans le terminal utilisateur et transmis à l'initiative d'un opérateur extérieur vers des terminaux mobiles désignés. Cette étape de transmission 309 peut être engagée à l'initiative de l'opérateur ou de manière automatique à l'issue de l'exécution de l'étape précédente.

L'étape de transmission 307, l'étape d'enregistrement 308 et l'étape de transmission 309 forment des sous-étapes de l'étape E4 selon ce mode de mise en oeuvre.

Au cours d'une étape de corrélation 310, une corrélation est effectuée entre les messages d'alerte émis dans une même zone géographique afin de déterminer des caractéristiques communes entre ces diverses alertes. La zone géographique est par exemple définie comme étant la zone couverte par le même proxy.

La corrélation des alertes peut avantageusement permettre de satisfaire une obligation légale d'information ou de s'assurer de l'origine du problème et de dégager des responsabilités.

On notera que le procédé selon l'invention pourra également comporter une étape de redirection des communications reçues par le terminal au cas où celui-ci présenterait une anomalie. Ces communications reçues pourraient être redirigées vers un autre terminal de même nature ou vers un terminal mobile, cet autre terminal étant désigné préalablement.

On notera par ailleurs, que la redirection des communications reçues par le terminal ne modifie pas la manière dont est effectuée la surveillance de la ligne et du terminal correspondant.

On notera que l'alerte pourrait également être donnée à l'initiative d'un opérateur distant.

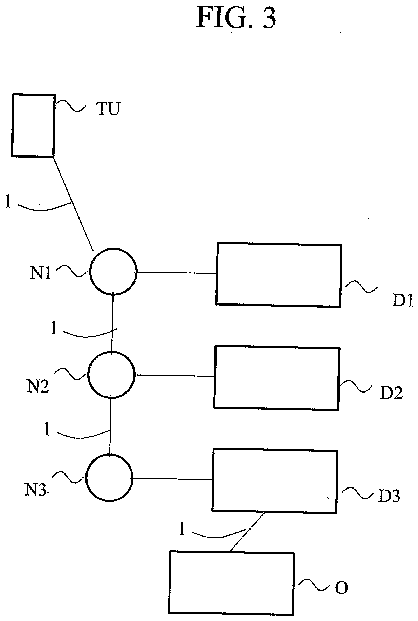

L'invention concerne également un système de surveillance permettant de mettre en oeuvre le procédé précédemment décrit. Un tel système est décrit ci-après en relation avec la Fig. 3.

Dans ce système le terminal de télécommunication utilisateur TU est relié par une ligne 1 d'un réseau de télécommunication à un opérateur. Cette ligne 1 présente des noeuds N au niveau desquels partent d'autres lignes (non représentées). Sur la Fig. 3 n'ont été représentés que trois noeuds N1, N2 et N3 servant à l'invention. Sur chacun des noeuds N1, N2 et N3 sont respectivement reliés des dispositifs de surveillance D1, D2 et D3.

Dans un mode de réalisation préféré du système, le terminal comporte une première partie des outils de surveillance mise en oeuvre par le procédé selon l'invention, la partie restante de ces outils de surveillance étant disposée dans le dispositif de surveillance D1.

Le terminal comporte notamment des moyens de mesure ou capteurs destinés à mesurer une valeur courante d'un paramètre représentatif du niveau de charge du terminal, des éléments d'optique, des moyens d'émission d'un signal destinés à émettre à une périodicité prédéterminée des données numériques représentatives de caractéristiques propres aux éléments d'optique et des moyens de configuration du terminal. On notera qu'en variante de réalisation les moyens de mesure pourraient être disposés à l'extérieur du terminal.

Le dispositif de surveillance D1 comporte notamment des moyens de pré-enregistrement d'une valeur courante d'un paramètre représentatif d'un niveau de charge du terminal, des moyens d'analyse de cette valeur courante, des moyens de suppression de la valeur courante préenregistrée, des moyens d'enregistrement de la valeur courante, des moyens de configuration à distance, des moyens de comparaison de la valeur courante à une valeur théorique, des moyens de vérification que le nombre n est inférieur au nombre N, des moyens d'avertissement de l'utilisateur du terminal, des moyens de vérification que la valeur courante du niveau de charge est supérieure à une valeur NF, des moyens de transmission de messages d'alerte au dispositif de surveillance D3 et des moyens d'établissement de corrélations entre plusieurs alertes. Le dispositif de surveillance D1 comporte en outre des moyens de réception de données numériques, des moyens d'analyse desdites données numériques, des moyens de bilan, des moyens de transmission d'un message à un système de supervision.

Le dispositif de surveillance D2 est chargé de contrôler plusieurs dispositifs de surveillance du type du dispositif de surveillance D1. Le dispositif de surveillance D2 comporte des moyens de collecte d'informations liées aux alertes lancées par le dispositif de surveillance D1, des moyens de limitation des communications reçues et émises depuis le terminal, des moyens de corrélation d'alerte et des moyens d'avertissement de l'utilisateur de la présence d'une anomalie dans le système de télécommunication et d'au moins un interlocuteur désigné pour intervenir sur cette anomalie.

Le dispositif de surveillance D3 comporte des moyens similaires aux moyens prévus dans le dispositif de surveillance D2. Ce dispositif de surveillance D3 contrôle un ensemble de dispositifs de surveillance du type du dispositif de surveillance D2. Le dispositif de surveillance D3 comporte notamment des moyens pour transmettre les alertes à des terminaux mobiles prédéterminés et des moyens de corrélations des alertes émises par plusieurs dispositifs de surveillance D2.

un notera que les moyens décrits en relation avec les dispositifs de surveillance D1, D2 et D3 sont destinés à mettre en oeuvre les étapes du procédé du même nom. Ainsi, les moyens de configuration sont prévus pour mettre en oeuvre l'étape de configuration.

Le dispositif de surveillance D3 est par ailleurs relié à un opérateur O qui gère à distance les transmissions de données, et de manière générale les différentes étapes exécutées par les dispositifs de surveillance D1, D2 et D3. A cet effet, il est aidé d'au moins un module logiciel stocké sur un support de données comportant des instructions logicielles pour faire exécuter le procédé selon l'invention.

## Revendications

1. Procédé de surveillance du fonctionnement d'un terminal de télécommunication (TU) placé dans un réseau de télécommunication à accès optique ainsi que d'un lien optique de télécommunication associé, reliant le terminal de télécommunication à un réseau de gestion d'un opérateur,
**caractérisé en ce qu'**il inclut:
- une étape de réception (E1) par un dispositif de surveillance de données de surveillance issues de moyens de mesures et émises par ledit terminal ;
- une étape d'analyse (E2) desdites données par ledit dispositif de surveillance en fonction d'un ensemble de données de surveillance prédéterminées représentatives de valeurs attendues, destinée à mettre en évidence une anomalie éventuelle, et
- une étape d'alerte (E4) d'au moins ledit réseau de gestion de l'opérateur en cas de mise en évidence d'une anomalie à l'issue de l'étape d'analyse.

2. Procédé selon la revendication 1, **caractérisé en ce qu'**il inclut une étape de corrélation d'alertes (E5) destinée à permettre la détermination de caractéristiques de l'anomalie.

3. Procédé selon la revendication 1 ou 2, **caractérisé en ce qu'**il inclut une étape de configuration consistant à modifier la périodicité d'émission des données de surveillance par ledit terminal en cas de détection d'anomalie.

4. Procédé selon l'une des revendications 1 à 3, **caractérisé en ce qu'**il inclut une étape de configuration consistant à transmettre un signal du dispositif de surveillance au terminal permettant de limiter les communications reçues et émises par le terminal de télécommunication à une liste de liaisons de communications prédéterminées.

5. Module logiciel stocké sur un support de données comportant des instructions logicielles pour faire exécuter le procédé selon l'une des revendications 1 à 4.

6. Système de surveillance du fonctionnement d'un terminal de télécommunication (TU) placé dans un réseau de télécommunication optique ainsi que d'un lien optique de télécommunication associé, reliant le terminal de télécommunication à un réseau de gestion d'un opérateur, **caractérisé en ce que** ledit terminal comprend des moyens de mesure de données de surveillance et des moyens d'émission de données de surveillance, et **en ce que** ledit système comporte au moins un dispositif de surveillance dudit terminal, ledit dispositif de surveillance comprenant :
- des moyens de réception de données de surveillance issues de moyens de données de surveillance prédéterminées représentatives de valeurs attendues, destinée à mettre en évidence une anomalie éventuelle, et
- des moyens d'alerte d'au moins ledit réseau de gestion de l'opérateur en cas de mise en évidence d'une anomalie par lesdits moyens d'analyse.

## Patentansprüche

1. Verfahren zur Überwachung des Betriebs eines Telekommunikationsendgeräts (TU), das sich in einem Telekommunikationsnetzwerk mit optischem Zugang befindet, sowie einer zugehörigen optischen Telekommunikationsverbindung, die das Telekommunikationsendgerät mit einem Verwaltungsnetz eines Betreibers verbindet,
**dadurch gekennzeichnet, dass** es Folgendes umfasst:
- einen Empfangsschritt (E1) zum Empfangen von Überwachungsdaten, die von Messmitteln kommen und von dem Endgerät gesendet werden, durch eine Überwachungsvorrichtung;
- einen Analyseschritt (E2) zum Analysieren der Daten durch die Überwachungsvorrichtung in Abhängigkeit von einer Gruppe von vorgegebenen Überwachungsdaten, die für erwartete Werte repräsentativ sind, um eine mögliche Unregelmäßigkeit nachzuweisen, und
- einen Warnschritt (E4) zum Warnen mindestens des Verwaltungsnetzes des Betreibers im Fall des Nachweises einer Unregelmäßigkeit am Ende des Analyseschritts.

2. Verfahren nach Anspruch 1, **dadurch gekennzeichnet, dass** es einen Warnungskorrelationsschritt (E5) umfasst, der dazu dient, das Bestimmen von Merkmalen der Unregelmäßigkeit zu ermöglichen.

3. Verfahren nach Anspruch 1 oder 2, **dadurch gekennzeichnet, dass** es einen Konfigurationsschritt umfasst, der darin besteht, die Häufigkeit des Sendens der Überwachungsdaten durch das Endgerät im Fall der Erkennung einer Unregelmäßigkeit zu ändern.

4. Verfahren nach einem der Ansprüche 1 bis 3, **dadurch gekennzeichnet, dass** es einen Konfigurationsschritt umfasst, der darin besteht, ein Signal der Überwachungsvorrichtung an das Endgerät zu übertragen, das es ermöglicht, die vom Telekommunikationsendgerät empfangenen und gesendeten Gespräche auf eine Liste mit vorgegebenen Gesprächsverbindungen zu beschränken.

5. Softwaremodul, das auf einem Datenspeichermedium gespeichert ist, umfassend Softwareanweisungen, um das Verfahren nach einem der Ansprüche 1 bis 4 ausführen zu lassen.

6. System zur Überwachung des Betriebs eines Telekommunikationsendgeräts (TU), das sich in einem optischen Telekommunikationsnetzwerk befindet, sowie einer zugehörigen optischen Telekommunikationsverbindung, die das Telekommunikationsendgerät mit einem Verwaltungsnetzwerk eines Betreibers verbindet, **dadurch gekennzeichnet, dass** das Endgerät Mittel zum Messen von Überwachungsdaten und Mittel zum Senden von Überwachungsdaten umfasst und dass das System mindestens eine Vorrichtung zur Überwachung des Endgeräts umfasst, wobei die Überwachungsvorrichtung Folgendes umfasst:
- Empfangsmittel zum Empfangen von Überwachungsdaten, die von Messmitteln kommen, die in dem Endgerät enthalten sind;
- Analysemittel zum Analysieren der Daten unter Berücksichtigung einer Gruppe von vorgegebenen Überwachungsdaten, die für erwartete Werte repräsentativ sind, um eine mögliche Unregelmäßigkeit nachzuweisen, und
- Warnmittel zum Warnen mindestens des Verwaltungsnetzes des Betreibers im Fall des Nachweises einer Unregelmäßigkeit durch die Analysemittel.

## Claims

1. Method for monitoring the operation of a telecommunication terminal (TU) situated in an optical access telecommunication network and of an associated optical telecommunication link, linking the telecommunication terminal to a management network of an operator,
**characterized in that** it includes:
- a step (E1) of reception, by a monitoring device, of monitoring data originating from measuring means and sent by said terminal;
- a step (E2) of analysis of said data by said monitoring device on the basis of a set of predetermined monitoring data representative of expected values, which is intended to highlight a possible anomaly; and
- a step (E4) of alerting at least said management network of the operator if an anomaly is highlighted at the end of the analysis step.

2. Method according to Claim 1, **characterized in that** it includes a step of correlating alerts (E5), which is intended to make it possible to determine features of the anomaly.

3. Method according to Claim 1 or 2, **characterized in that** it includes a configuration step consisting in modifying the periodicity of the sending of the monitoring data by said terminal if an anomaly is detected.

4. Method according to one of Claims 1 to 3, **characterized in that** it includes a configuration step consisting in transmitting a signal from the monitoring device to the terminal making it possible to limit the communications received and sent by the telecommunication terminal to a list of predetermined communication links.

5. Software module stored on a data storage medium, including software instructions for executing the method according to one of Claims 1 to 4.

6. System for monitoring the operation of a telecommunication terminal (TU) situated in an optical telecommunication network and of an associated optical telecommunication link, linking the telecommunication terminal to a management network of an operator, **characterized in that** said terminal comprises means for measuring monitoring data and means for sending monitoring data, and **in that** said system includes at least one device for monitoring said terminal, said monitoring device comprising:
- means for receiving monitoring data originating from measuring means comprised in said terminal;
- means for analysing said data, taking into account a set of predetermined monitoring data representative of expected values, which is intended to highlight a possible anomaly; and
- means for alerting at least said management network of the operator if an anomaly is highlighted by said analysis means.
